# FASCICULE DE BREVET EUROPEEN

(11) **EP 1 058 905 B1**
(45) Date de publication et mention de la délivrance du brevet: **30.07.2003**
(21) Numéro de dépôt: 98958950.2
(22) Date de dépôt: 10.11.1998
(51) Int. Cl.: G06K 5/02

(54) **PROCEDES MAGNETIQUES DE CONTROLE DE L'IMPRESSION DE DOCUMENTS**
MAGNETISCHE VERFAHREN ZUR KONTROLLE VON DRUCK VON DOKUMENTEN
MAGNETIC METHODS FOR CONTROLLING DOCUMENT PRINTING

(30) Priorité: 10.11.1997 FR 9714332
(43) Date de publication de la demande: 13.12.2000
(73) Titulaire: Girod, Raoul, 69530 Brignais (FR)
(72) Inventeur: Girod, Raoul, 69530 Brignais (FR)
(74) Mandataire: Bratel, Gérard
(86) Numéro de dépôt international: FR9802402
(87) Numéro de publication internationale: WO99024931

(56) Documents cités:
- FR-A- 2 748 178
- NL-A- 8 603 173

## Description

La présente invention a pour objet l'utilisation d'encres et de têtes magnétiques par les appareils d'impression utilisés en informatique et en télécommunication via les réseaux téléphoniques y compris de type Internet.
Ce procédé permet un contrôle en temps réel, simultané à l'impression par relecture immédiate de l'impression réalisée avec de l'encre optique et magnétique, avec retransmission, à l'organe de commande, de la lecture magnétique du document imprimé.

Actuellement, de nombreux moyens brevetés, ou du domaine public, existent:
- encres magnétiques ou électro-magnétiques
- encres fluorescentes
- encres invisibles, lisibles sous lumière ultraviolette ou infrarouge
- encres à conductivité électrique
- papiers spéciaux non photocopiables
- stylos à encre magnétique
- algorithmes de codage et de cryptage
- ...
La plupart d'entre eux permettent d'imprimer des documents qui peuvent ensuite être contrôlés, en cas de besoin, même plusieurs années après, pour vérifier leur authenticité. Ce sont des améliorations par rapport aux documents simples, copiables et modifiables.
Mais, aucun de ces moyens ne permettent de le faire en temps réel, en simultané avec l'impression, et en renvoyant immédiatement la relecture à l'émetteur ou à l'organe de commande.
La simultanéité permet des contrôles supplémentaires en particulier grâce aux références de contrôle : date et heure de l'impression et de la relecture.

Certains brevets récents utilisent la relecture optique immédiate d'une impression avec renvoi à l'expéditeur pour contrôle:
- fax avec accusé de réception: FR 96 05467
- imprimante-scanner: FR 96 05943
- téléparapheur: FR 96 06892
- terminal de télétravail: FR 96 06893
mais l'authentification absolue, au sens juridique, peut être contestée ou difficile à interpréter par des non spécialistes.

La présente invention, afin de perfectionner les matériels ci-dessus, ajoute une composante supplémentaire à l'impression, en utilisant des encres optiques, mais qui possèdent en plus une ou plusieurs composantes supplémentaires:
- magnétique
- électrique
- ou autres procédés déjà connus.
Cette composante supplémentaire permet:
- leur relecture immédiate par des capteurs:
   magnétiques ou autres
- l'impossibilité de photocopier ou de lire par scanner optique, donc impossibilité de reproduire le même document avec la possibilité de la falsifier.
- de calculer une signature de l'image non optique, qui permettra d'identifier le document, ou de compléter son impression par des signaux de contrôle, optiques et magnétiques.
- de superposer à des caractères magnétiques des signaux ou codes invisibles, en vue de la relecture ou de contrôles ultérieurs.
Dans des versions très complètes, on peut associer:
- l'impression optique
- l'impression magnétique
- l'impression visible en UV ou IR
- la superposition de signaux sur l'encre magnétique
- l'addition de signatures et de codes de contrôle
- les sons ou transmissions phonétiques
- le stockage dans des serveurs de contrôle avec les relectures correspondantes immédiates et retransmises.
La présente invention, telle que définie dans les revendications indépendantes 1 et 3, comme moyen de base non exclusif, utilise des encres magnétiques ( leurs compositions sont multiples et connues) pour les mécanismes d'impression. L'encre magnétique déposée sur le document ou l'objet, ( papier ou autre) est magnétisable par une tête d'écriture magnétique et lisible magnétiquement par une ou deux têtes, associées ou non, de lecture magnétique.
Un original aura toujours toutes les composantes imprimées. Certains dispositifs d'impression ne permettent pas l'utilisation, par nature, d'encre magnétique.Seule la relecture optique ou l'utilisation d'autres types d'encres non magnétiques ( voir plus haut ) seront possibles.
L'encre magnétique n'est pas obligatoirement magnétisée en permanence, et peut être magnétisée qu'en vue d'une lecture magnétique immédiate, avec démagnétisation éventuelle.
La magnétisation permanente est utile pour la superposition de codes magnétiques invisibles, mais présente des problèmes de conservation dans le temps et d'interférences avec d'autres documents magnétiques.
Cet inconvénient, bien que n'excluant pas cette possibilité dans les variantes de la présente invention, peut être contourné par l'impression de codes et d'informations de contrôle, ajoutés sur les documents imprimés, avec ou sans cryptage.
Les impressions définies dans la présente invention peuvent contenir toutes les informations manipulées en informatique et en télécommunication: caractères alphanumériques, images, signatures, sons, signaux analogiques, ... même si leur transcription optique imprimée n'est pas immédiatement lisible par un être humain.
La parole peut être authentifiée par les signaux correspondant imprimés ou enregistrés, avec traduction éventuelle en caractères alphanumériques par un logiciel de reconnaissance vocale, et traitée de la même façon que l'écriture au niveau de la vérification et de l'authentification sur un document.
L'impression correspondante sur un document vérifié et authentifié peut constituer une preuve au sens juridique du terme, plus aisément manipulable que d'autres supports d'information.
L'aspect juridique des procédés envisagés par la présente invention pose plusieurs problèmes de nature juridique:
- protection de la confidentialité dans certaines circonstances,
- détermination des présomptions, donc du sens de la preuve, en cas de discordance-entre les documents échangés: originaux, copie, double accusé de réception ... Par analogie avec une lettre recommandée avec accusé de réception, c'est l'expéditeur qui est le maître-d'oeuvre de la communication et qui doit réunir tous les éléments de preuve en cas de contestation.La présomption de bonne foi est donc du côté du destinataire qui possède ou non le document transmis et qui a émis ou non l'accusé de réception. C'est à l'émetteur de s'assurer que toutes les étapes de la communication se sont bien déroulées.A lui d'intervenir par un autre moyen si l'ensemble de la communication n'est pas correct ou incomplet.
Les considérations ci-dessus sont du domaine du législateur ou de la jurisprudence.
La présente invention ne décrit que les procédés et moyens techniques nécessaires.
La relecture immédiate du document imprimé par le destinataire avec retransmission vers l'expéditeur, en utilisant une relecture non optique, réduit considérablement les possibilités de falsification.
Mais, la retransmission peut être décalée dans le temps si les moyens en communication ne répondent pas immédiatement. C'est le cas des télécopieurs avec mémoires de stockage et des ordinateurs qui stockent les messages échangés dans leurs mémoires magnétiques, sans impressions ou transmissions immédiates.
Pour les ordinateurs, les logiciels d'émulation doivent être programmés pour émuler les matériels qui communiquent.
Dans ce cas, il semble que les logiciels ( non modifiables par les utilisateurs ) devraient être certifiés par un organisme officiel qui attribuerait un code de contrôle unique inclus dans les informations de la communication. Dans tous les cas, une signature calculée sur les informations transmises et imprimées de part et d'autre, combinée avec des impressions non reproductibles facilement, retransmises pour contrôle et vérifiables ultérieurement, assurent un maximum de preuves au sens juridique du terme.Ces signatures pourront exister par ligne, par page ou par document.
Le terme "signature" utilisé dans le présent descriptif définit le résultat d'un calcul réalisé sur les signaux de la communication.De nombreux modes de calcul, avec ou sans clef de cryptage, existent dans le domaine public.
Les matériels utilisant les procédés de la présente invention pourront être utilisés suivant 2 modes utilisant les mêmes moyens:
- un mode normal de communication, impression.
- un mode de lecture de contrôle ou de recalcul de la signature d'un document pour authentification.

Dans une configuration de base de la présente invention, les têtes des matériels contiendront:
- un mécanisme d'impression utilisant de l'encre contenant des particules magnétiques
- un mécanisme de magnétisation
- un mécanisme de lecture magnétique.
Dans certains cas, un mécanisme de lecture optique peut être associé, ce qui donne un ensemble à quadruple fonction.
Dans un cas incomplet, les matériels actuels, inchangés, pourront utiliser une cartouche d'encre magnétique à la place d'une cartouche d'encre normale.
Ce cas permettra au moins l'authentification à postériori, mais sans ré-émission de contrôle des composantes magnétiques de l'impression.
La lecture magnétique des points imprimés donne un signal électrique facilement cumulable pour le calcul rapide d'une signature.
La lecture magnétique nécessite une tête de magnétisation de l'encre magnétique pour permettre sa lecture par un lecteur magnétique, mais cette technologie est plus simple que celle de la lecture optique qui nécessite une source d'illumination optique.

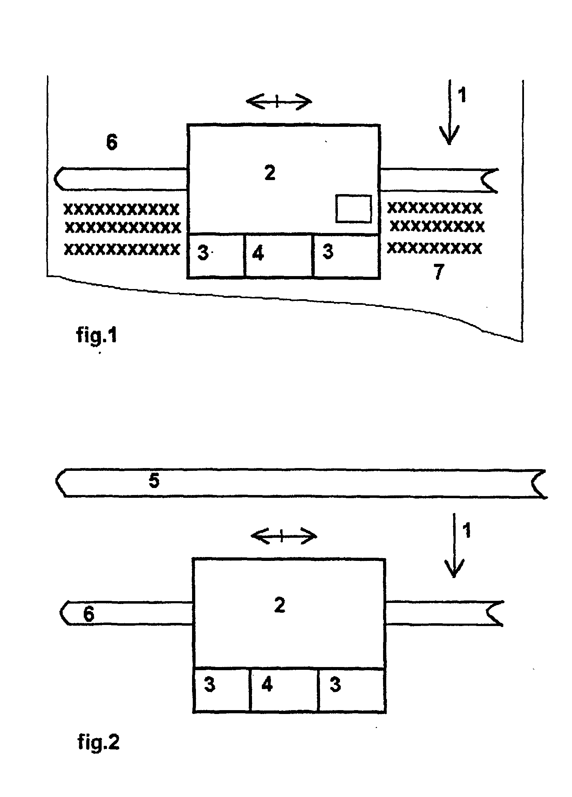

Les figures 1 à 6 décrivent les variantes et applications de l'invention.

La figure 1 montre un mécanisme qui associe , sur un document 1 en cours d'impression, une tête d'impression 2 guidée par l'axe 6 , utilisant une cartouche d'encre magnétique ( colorant plus particules magnétisables), et associée avec une tête 4 de lecture magnétique , encadrée par 2 têtes 3 de magnétisation de l'encre.
Ainsi, simultanément à l'impression , les têtes magnétiques lisent les bandent imprimées, au fur et à mesure que le papier avance, et transmettent le résultat de la lecture magnétique au mécanisme de commande, soit en direction d'une ligne de communication, soit en direction d'un ordinateur.
Cette tête mixte peut constituer le mécanisme de base d'une imprimante interactive qui produit des documents imprimés avec de l'encre magnétique visible.Cette imprimante peut relire ultérieurement ces mêmes documents pour convertir la lecture magnétique en signaux qui peuvent être réimprimés et donc visibles dans leur version originale.
La figure 2 décrit le même mécanisme que la figure 1 mais qui associe en plus une barrette de lecture optique placée en amont.
Plusieurs dispositions physiques sont possibles pour ces différents éléments: côte à côte, en aval, avec des largeur d'une bande ou avec des largeurs correspondant à un aller et un retour, accompagnées par le même mécanisme que la tête d'impression et fixées sur des barrettes occupant toute la largeur du papier.
Cette association peut constituer le mécanisme de base d'un appareil destiné à lire optiquement un document. pour le visualiser à distance, à imprimer sur ce même document avec de l'encre magnétique, ou à le signer, et à relire magnétiquement les bandes imprimées pour les renvoyer à l'organe de commande pour contrôle ou stockage.
La figure 3 montre une imprimante vue de côté utilisant le mécanisme de la figure 1.
La figure 4 montre un appareil de télésignature ou un terminal de télétravail vu de côté utilisant le mécanisme de la figure 2.
La figure 5 montre un télécopieur utilisant sur le circuit des documents vierges v , une tête d'impression avec encre magnétique 2, associée à une tête de magnétisation 3 et à une tête de lecture magnétique 4, situées en aval sur le circuit des documents imprimés.
La tête 5 est une barrette classique de lecture optique des documents originaux o à émettre.
La relecture optique par la tête 4 permet de renvoyer vers l'expéditeur d'un fax reçu, un double faisant office d'accusé de réception.Ce double est complété par une signature optique telle que définie plus haut.

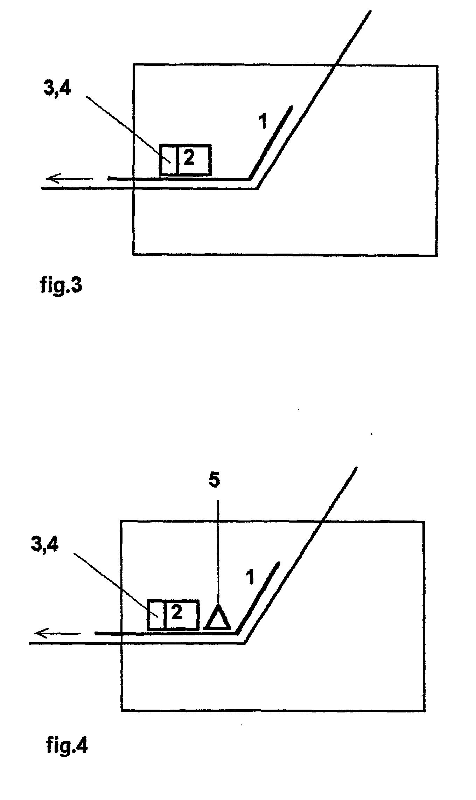

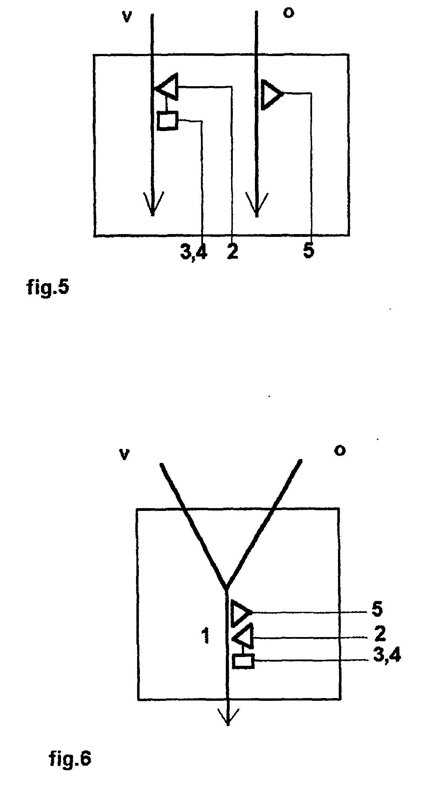

La figure 6 montre un télécopieur utilisant les mêmes éléments que sur la figure 5 mais sur un circuit unique de document.Dans ce cas, il peut remplir, en plus, les mêmes fonctionnalités que l'appareil défini dans la figure 4.

Les procédés définis ci-dessus sont utilisables sur tous les matériels d'impression: imprimantes, télécopieurs, terminaux de télétravail, ... en vue de contrôler et de ré-expédier les informations d'une communication et d'authentifier les documents correspondants.

## Revendications

1. Procédé, utilisable pour les appareils de réception et d'impression de documents (1) en vue de contrôler et d'authentifier les documents imprimés, **caractérisé en ce qu'**il associe un mécanisme d'impression (2) alimenté en encre ayant des propriétés optiques et magnétiques, un mécanisme de magnétisation (3) et un mécanisme de lecture magnétique (4) en vue d'une relecture de contrôle.

2. Procédé selon la revendication 1, **caractérisé en ce qu'**il associe également un mécanisme de lecture optique (5) au mécanisme de lecture magnétique (4).

3. Appareil utilisant le procédé de la revendication 1 ou 2, **caractérisé en ce qu'**il combine, sur au moins un circuit de documents (1), un mécanisme d'impression avec de l'encre optique et magnétique (2), au moins une tête de magnétisation (3), une tête de lecture magnétique (4), et éventuellement une tète de lecture optique (5), de manière à permettre un mode d'impression optique et magnétique, ou un mode de relecture magnétique et éventuellement optique, ou un mode simultané d'impression et de lecture magnétiques et éventuellement optiques.

4. Appareil selon la revendication 3, caractérisé ce qu'il consiste en une imprimante comportant un mécanisme d'impression avec de l'encre optique et magnétique (2), une ou deux têtes de magnétisation (3), une tête de lecture magnétique (4), et éventuellement une tête de lecture optique (5).

5. Appareil selon la revendication 3, caractérisé ce qu'il consiste en un appareil de télésignature ou un terminal de télétravail, permettant de lire, signer, imprimer, compléter à distance un document, l'appareil ou terminal utilisant, sur un circuit de documents (1), la tête de lecture optique (5), la tête d'impression d'encre optique et magnétique (2), et les têtes de magnétisation (3) et de lecture magnétique (4).

6. Appareil selon la revendication 3, caractérisé ce qu'il consiste en un télécopieur, avec un circuit de documents vierges (v) et avec un circuit de documents originaux (o) à émettre, constituant éventuellement un circuit unique, la tête d'impression à encre optique et magnétique (2), associée à la tête de magnétisation (3), ainsi que la tête de lecture magnétique (4), étant situées sur le circuit de documents vierges (v), tandis que la tête de lecture optique (5) est située sur le circuit de documents originaux (o).

## Patentansprüche

1. Verfahren, das für Geräte zum Empfang und zum Drucken von Schriftstücken (1) hinsichtlich der Überprüfung und der Authentisierung der gedruckten Schriftstücke einsetzbar ist, **dadurch gekennzeichnet, dass** es vereint: einen Druck-Mechanismus (2), der mit Tinte gespeist wird, die optische und magnetische Eigenschaften besitzt, einen Mechanismus zur Magnetisierung (3) und einen magnetischen Lese-Mechanismus (4) im Hinblick auf ein erneutes Kontroll-Lesen.

2. Verfahren nach Anspruch 1, **dadurch gekennzeichnet, dass** es auch einen optischen Lese-Mechanismus (5) mit dem magnetischen Lese-Mechanismus (4) vereint.

3. Gerät, das das Verfahren nach Anspruch 1 oder 2 einsetzt, **dadurch gekennzeichnet, dass** es, bei mindestens einem Durchlauf von Schriftstücken (1), kombiniert: einen Druck-Mechanismus (2) mit optischer und magnetischer Tinte, mindestens einen Magnetisierungs-Kopf (3), einen magnetischen Lese-Kopf (4), und gegebenenfalls einen optischen Lese-Kopf (5), und zwar in der Weise, dass es einen optischen und magnetischen Druckmodus oder einen magnetischen und gegebenenfalls optischen Modus des erneuten Lesens oder einen simultanen magnetischen und gegebenenfalls optischen Druck- und Lese-Modus erlaubt.

4. Gerät nach Anspruch 3, **dadurch gekennzeichnet, dass** es besteht aus einem Drucker, der einen Druck-Mechanismus (2) mit optischer und magnetischer Tinte, einen Magnetisierungs-Kopf (3) oder zwei Magnetisierungs-Köpfe, einen magnetischen Lese-Kopf (4) und gegebenenfalls einen optischen Lese-Kopf (5) umfasst.

5. Gerät nach Anspruch 3, **dadurch gekennzeichnet, dass** es besteht aus einem Gerät zur Tele-Unterschrift oder einem Terminal für Tele-Arbeit, das es ermöglicht, ein Schriftstück über eine Entfernung hin zu lesen, zu unterschreiben, zu drucken und zu vervollständigen, wobei das Gerät oder das Terminal, bei einem Durchlauf von Schriftstücken (1), den optischen Lese-Kopf (5), den Druck-Kopf (2) mit optischer und magnetischer Tinte und den Magnetisierungs-Kopf (3) und den magnetischen Lese-Kopf (4) einsetzt.

6. Gerät nach Anspruch 3, **dadurch gekennzeichnet, dass** es besteht aus einem Telekopierer mit einem Durchlauf von unbedruckten Papieren (v) und mit einem Durchlauf von zu versendenden Originalschriftstücken (o), die gegebenenfalls einen einzigen Durchlauf bilden, aus einem Druck-Kopf (2) mit optischer und magnetischer Tinte, zugeordnet dem Magnetisierungs-Kopf (3), sowie aus dem magnetischen Lese-Kopf (4), welche sich am Durchlauf unbedruckter Papiere (v) befinden, während der optische Lese-Kopf (5) sich am Durchlauf der Originalschriftstücke (o) befindet.

## Claims

1. A procedure which can be used for apparatuses for receiving and printing documents (1) for the purpose of checking and authenticating printed documents, **characterised in that** it combines a printing mechanism (2) which is supplied with ink having optical and magnetic properties, a magnetisation mechanism (3), and a magnetic read-out mechanism (4), for the purpose of read-back for checking.

2. A procedure according to claim 1, **characterised in that** it also combines an optical read-out mechanism (5) with the magnetic read-out mechanism (4).

3. An apparatus which employs the procedure of claims 1 or 2, **characterised in that** it combines, in at least one document (1) circuit, a printing mechanism (2) using optical and magnetic ink, at least one magnetisation head (3), a magnetic read head (4), and optionally an optical read head (5), in such a way as to enable an optical and magnetic printing method, or a magnetic and optionally optical read-back method, or a method of magnetic and optionally optical printing and read-out simultaneously.

4. An apparatus according to claim 3, **characterised in that** it consists of a printer comprising a printing mechanism (2) using optical and magnetic ink, one or two magnetisation heads (3), a magnetic read head (4), and optionally an optical read head (5).

5. An apparatus according to claim 3, **characterised in that** it consists of a remote signature apparatus or a teleworking terminal which enables a document to be remotely read out, signed, printed and completed, said apparatus or terminal employing, in one document (1) circuit, the optical read head (5), the optical and magnetic ink print head (2), and the magnetisation (3) and magnetic (4) read heads.

6. An apparatus according to claim 3, **characterised in that** it consists of a fax machine having a circuit for blank documents (v) and having a circuit for original documents (o) to be sent, optionally constituting a single circuit, the magnetic read head (4), as well as the optical and magnetic ink print head (2) which is associated with the magnetisation head (3), being situated in the blank document (v) circuit, whilst the optical read head (5) is situated in the original document (o) circuit.
